# EUROPEAN PATENT SPECIFICATION

(11) **EP 1 495 595 B1**
(45) Date of publication and mention of the grant of the patent: **02.12.2009**
(21) Application number: 03710578.0
(22) Date of filing: 25.03.2003
(51) Int. Cl.: H04L 12/56, H04L 29/12, H04W 84/12

(54) **A SYSTEM, AN ARRANGEMENT AND A METHOD RELATING TO IP-ADDRESSING**
SYSTEM UND ANORDNUNG UND VERFAHREN IN BEZUG AUF DIE IP-ADRESSIERUNG
SYSTEME, ARRANGEMENT ET PROCEDE RELATIFS A L'ADRESSAGE IP

(30) Priority: 26.03.2002 SE 0200939
(43) Date of publication of application: 12.01.2005
(73) Proprietor: TELEFONAKTIEBOLAGET LM ERICSSON (publ), 164 83 Stockholm (SE)
(72) Inventor: RÖNNEKE, Hans, S-434 36 Kungsbacka (SE)
(74) Representative: Bergentall, Annika Maria
(86) International application number: PCT/SE2003/000487
(87) International publication number: WO 2003/081856

(56) References cited:
- WO-A1-01/54437
- WO-A1-01/67798
- JOHNSON AND PERKINS: 'Mobility support in IPv6', [Online] 02 July 2001, XP002903073 Retrieved from the Internet: <URL:http://www.mipl.mediapoli.com/drafts/d raft-ietf-mobileip-ipv6-15.txt> [retrieved on 2002-09-25]
- NARTEN T. ET AL.: 'Neighbor discovery for IP Version 6 (IPv6)' RFC2461, [Online] December 1998, XP002903074 Retrieved from the Internet: <URL:http://www.faqs.org/rfcs/rfc2461.html> [retrieved on 2002-09-25]

## Description

### FIELD OF THE INVENTION

The present invention relates to end user station addressing in a communication system with a number of end user stations (hosts) connected over access networks and routing arrangements and which system supports an IPv6 (Internet Protocol version 6) addressing scheme. The end user stations are connected to the routing arrangements over links, and router advertisements are sent from router arrangements to end user stations (hosts) to support provisioning of IPv6.

The invention also relates to a routing arrangement as referred to above, and to a corresponding method.

### STATE OF THE ART

Already today there is an enormous amount of end user stations, or network terminals, used for many different purposes. In the future there will be even more and more network terminals also for other, future, purposes. Examples on end users stations are mobile phones, PDAs (Personal Digital Assistants), computers, Laptops, Palm tops, cable-TV modems, X-DSL modems, intelligent networked appliances, wireless web pads etc. In other words, enormous amounts of network devices are expected in the near future. However, all these network terminals or end user stations need to be addressable. In general each network terminal or end user station must have its own unique, public IP-address. This is particularly important in order to be able to realize the vision of "always on", "always connected", and "always reachable" from anywhere. In the future there will also be more and more different networks which all are connected with each other, such as company networks, broadband access networks, residential networks, cellular networks, wireless networks, local networks etc.

Until now the Internet has been based on the IP-protocol version 4, IPv4, addressing scheme. The IP-protocol version 4 uses a 32-bit address in the form of [IP-address-XXX.XXX.XXX.XXX/ subnet mask-XXX.XXX.XXX.XXX]. However, the available address space of IPv4 will soon have come to an end and there will not be enough unique IP-addresses left to handle out for a new operator or for new types of end user stations or for more devices in general. Even if technologies such as private IP-address networks in combination with NAT (Network Address Translation) and different types of proxies are used, this would not be enough.

Therefore the new addressing scheme, IP version 6, has been suggested. IPv6 uses a 128-bit address base. This means that the address length is four times that of IPv4. The IPv6 basic specification includes in addition thereto security and it includes packet encryption, ESP (Encapsulated Security Payload) and source of authentication, AH (Authentication Header).

Another advantage of IPv6 is that, in order to support for real time traffic such as video conferences, IPv6 has a "flow label". Using flow labeling, it gets possible for a router to know which end-to-end flow a packet belongs to, and then to find out which packets belong to the real time traffic class. Moreover the basic specification of IPv6 includes an address autoconfiguration facility. This means that even a novice user can connect his machine, or the end user station, to the network. It may also implement a specification optimisation in that it discards old and useless parts of IPv4 whereas it keeps with useful parts of IPv4. Moreover it includes support for mobile Internet.

Work is in progress within 3GPP standardisation Release 5, to introduce IPv6 in the 3GPP standards. IPv6 as specified within IETF (Internet Engineering Task Force) standard body does in general not take any special consideration to the specific environment in the cellular/wireless domain, e.g. as far as the radio resources are concerned, and as far as power consumption of the terminal is concerned. The known solution of IPv6 address autoconfiguration is described in IETF RFC (Request For Comments) 2461. In this document the algorithm for sending first initial Router Advertisements (RA) from a router to an end user station is described. Generally the constants controlling the sending of RA are set so that three initial RAs are sent with 16 seconds interval.

After the initial phase, a router (e.g. GGSN), (Gateway GPRS Support Node,) shall start to send RAs periodically, default one RA approximately every 10 minutes. It should be noted that the IETF standard, e.g. the RFC 2461, leaves it open to specify specific values on their specified constants for specific "links". The connection between a mobile terminal and the GGSN is one specific link. It should also be noted that the mobile terminal needs the RA to be able to create its IPv6 address. The RA contains the "Prefix" which is the first part (64 bits) of the 128 bit IPv6 address. The mobile terminal takes this prefix, adds a 64 bit suffix (which in the 3GPP case could be a random number), and then it has its global (or site-local) IPv6 address and can start to communicate.

The problem is that the RAs are not sent frequently enough during the initial phase resulting in a slow set up of the GPRS of 3G packet/IP connection to Internet or Intranet. End users do not want to wait for for example 15 seconds before they can start to use the page they have requested on their mobile phone, or start the video/multimedia-phone-call after they have dialled the number. The general wish is to be able to push the button and then expect a response within one or a few seconds. The problem with just setting the RFC 2461 specified parameters to a value allowing these frequent RAs (e.g. at intervals of 1,2 or 3 seconds, is that during the first minute, far to may RAs will have to be sent over the radio interface, perhaps 30 or more. That will consume radio resources and also processing resources in 3G nodes, like GGSN, SGSN, RNC and Node B, not for one but for every PDP context that is initiated (cf. 3GPP TS 23.060; "General Packet Radio Service (GPRS); Service Description of Stage 2. Setting the parameters so that fewer RAs will be sent, will on the other hand result in a long response time for the end user.

"Mobility support in IPv6", by Johnson and Perkins, 02 July 2001 discloses IPv6 routers sending router advertisements to end user stations with a constant frequency. The solution suffers from the same drawbacks as discussed above, e.g. with reference to RFC 2461.

### SUMMARY OF THE INVENTION

It is therefore an object of the present invention to suggest a solution which enables a fast creation or generation of an IPv6 address for an end user station, fixed or wireless, to enable a fast set up. It is a particular object of the invention to suggest a solution through which the specific requirements and problematics, of a wireless environment can be considered as far as IPv6 addressing schemes are concerned. Even more particularly it is an object of the invention to suggest a solution through which radio resources can be saved, i.e. through which waste of radio resources is eliminated or reduced, and through which the power consumption of wireless/mobile end user stations is considered, and not wasted, as far as IPv6 addressing is concerned.

It is also an object of the invention to suggest a solution, a system, a routing arrangement and a method respectively, which enables a fast set up of an IP connection, e.g. a GPRS/UMTS/WCDMA or 3GPP connection in particular, to e.g. Internet and/or an intranet, or for a WLAN (Wireless Local Area Network).

Further yet it is an object of the invention to provide a solution through which unnecessary transmissions of router advertisements are avoided, particularly to enable an optimisation as far as giving information to wireless end user stations about IPv6 addressing information is concerned to enable generation of a full IPv6 address at the end user station. Particularly it is an object of the invention to offer to the end user an acceptable response time when e.g. using a wireless station, such as a 3GPP mobile station.

Still further it is an object of the invention to provide a solution through which a fast response to IPv6 address autoconfiguration is allowed while sill saving radio resources in radio networks, particularly within the 3GPP domain, or even more particularly within the 3GPP IP Multimedia Subsystem (IMS) domain, and while still saving processing power in network nodes, e.g. routing arrangements, such as GGSNs.

These and other objects are achieved through a system, a routing arrangement and a method as suggested in the independent claims. Advantageous or preferred implementations are given by the dependent claims.

According to the invention a routing arrangement is suggested, which is adapted to send initial router advertisements to an end user station with a controllable and varying frequency during an initial phase. It is further adapted to configure the varying time intervals to lapse between consecutive initial router advertisements whereby, during said initial phase, the sending frequency is higher at the beginning and lower at the end, and when the initial phase has lapsed the routing arrangement is adapted to send router advertisements with a fixed or constant periodicity.

Particularly the links are point-to-point links, but the concept can also be used for other links. Advantageously the frequency with which router advertisements are sent gradually decreases, i.e. the lengths of the time intervals between consecutive router advertisements gradually increase. In particular implementation the lengths of the time intervals between router advertisements increase exponentially. The decrease in frequency for sending of router advertisements may, in one implementation, occur at given transmissions, e.g. at every second transmission of a router advertisement etc. and in that the decrements in frequency may vary, e.g. from smaller to larger.

Advantageously router advertisements are sent during the initial phase, with a varying, decreasing, frequency during a given time. Preferably router advertisements are sent during the initial phase, with a varying, regularly or irregularly, decreasing frequency, at least during a given time period and the time intervals are configurable, e.g. separately, by the routing arrangement.

In a particular implementation initial router advertisements (RAs) during the initial phase are sent with consecutive time intervals (ΔTᵢ) varying as (ΔT_{i,i=1}, ...,) 1 s, 2 s, 4 s, 8 s, 16 s, 32 s, starting with the time interval for sending a first router advertisement, e.g. after establishment of connection. Initial router advertisements (RAs) may be sent for at least 30 seconds. The time periods to lapse before sending a first RA and subsequently between consecutive router advertisements may be hard coded or configurable. After the initial phase has lapsed, the periodicity for sending of router advertisements is fixed or constant, or e.g. given by a maximum or minimum value.

In particular implementations sending of a message to request information needed for creation of an IPv6 address from the end user station to the routing arrangement is implemented, e.g. a router solicitation (RS). Upon reception of such a message, the router arrangement only sends one response router advertisement during the initial phase (unless requested through a RS again). This is specially applicable on point-to-point links, since then there is only one host on each link. A first initial router advertisement may sent from the routing arrangement to an accessing/requesting end user station substantially immediately upon access/request, i.e. when the router arrangement becomes aware of the fact that the end user station needs a router advertisement. Then the randomised part of the calculation as the time o transmission is omitted. This generally presupposes that there is only one host on the link, although it also could be applicable in other cases.

Particularly the system implements IPv6 address autoconfiguration. Further the system comprises an IP network, with fixed and/or wireless end user stations (hosts), e.g. a 3GPP system, e.g. WCDMA, GSM/GPRS, UMTS. It may also comprise a Wireless Local Area Network (WLAN). Then, however, the links are generally not point-to-point links. For the 3GGP domain the routing arrangements comprise GGSNs, i.e. GGSNs perform the routing functionality in this aspect and at least some end user stations are mobile hosts, the prefix of the IPv6 address being provided to the mobile host by the Router Advertisement (RA), and upon reception thereof the mobile host creates/generates the IPv6 suffix, e.g. a random number.

In one implementation a maximum or a default value is given, indicating the total number of router advertisements or the total time period of the initial phase when a link has been established between the mobile host (station) and the GGSN. Implementation of sending of Router Solicitations (RSs) from the mobile station to the GGSN for requesting a Router Advertisement may be implemented, alternatively it is not. After transmission of a Router Advertisement to the end user station, the further transmission of Router Advertisements during the initial phase may be interrupted of the RA can be seen as a response to an RS, particularly for point-to-point links. According to the invention it is also provided a routing arrangement, in an IP communication system supporting an IPv6 addressing scheme, and connecting to a number of end user stations over links. The routing arrangement implements sending of router advertisements to provide an end user station with information about the first part (prefix) of the IPv6 address. Router advertisements to an end user station are sent with a controllable and varying frequency during an initial phase, and during said initial phase, the frequency is higher at the beginning and lower at the end. The frequency with which router advertisements are sent gradually decreases, i.e. the lengths of the time intervals before sending a first router advertisement and between consecutive router advertisements gradually increase, particularly exponentially. Router Advertisements may be sent during the initial phase, with a varying, regularly or irregularly decreasing frequency, at least during a given time period.

In advantageous implementations sending of messages to request information needed for creation of an IPv6 address from the end user stations to the routing arrangements is implemented, e.g. a router solicitation (RS). Upon reception of such a message, the router arrangement only sends one response router advertisement during the initial phase, unless a further router solicitation is received, indicating that the user station did not actually receive the requested RA. Particularly a first initial Router Advertisement is sent from the routing arrangement to an accessing/requesting end user station substantially immediately upon access/request, i.e. when the router arrangement becomes aware of the fact that the end user station needs a Router Advertisement. This is particularly advantageous and appropriate for point-to-point links, such as e.g. between a GGSN and an MS of a 3GPP, GSM/GPRS, system. It is however also applicable for any other point-to-point links. It may also be implemented for links in e.g. WLANs, even if they are not point-to-point links if e.g. there is communication with one "host" at a time or if same particular identification etc. is included such that the "host" can be distinguished from other "hosts".

Particularly a maximum or a default value is given, indicating the total number of router advertisements or the total time period of the initial phase when a link has been established between the mobile host (station) and e.g. the GGSN. The invention also suggests a method for, in an IP communication system supporting an IPv6 addressing scheme, and comprising a number of end user stations connecting to routing arrangements over links. It comprises the step of; sending router advertisements from a routing arrangement to an end user station, to provide said end user station with information about the first part (prefix) of the IPv6 address, with a controllable and varying frequency during an initial phase, such that the frequency is higher at the beginning and lower at the end of the initial phase. Particularly the method comprises the step of, during the initial phase, gradually increasing, e.g. exponentially, the time interval between consecutive router advertisements, and still further of sending router advertisements in the initial phase at least during a given time interval. In specific implementations the method further comprises the steps of; implementing sending of a message to request IPv6 addressing information, e.g. a router solicitation, from the end user station to the routing arrangement; receiving the message/router solicitation in the routing arrangement; sending only one response router advertisement to the end user station during the initial phase, unless receiving a further router solicitation and even more particularly of sending a router advertisement substantially immediately, without delay, to an end user station needing, e.g. indicated by a router solicitation, IPv6 addressing information.

### BRIEF DESCRIPTION OF THE DRAWINGS

The invention will in the following be further described in a non-limiting way, with reference to the accompanying drawings, in which:
- Fig. 1: very schematically illustrates a router arrangement connecting to a number of end user stations/hosts e.g. over point-to-multipoint Ethernet Links, to which the inventive concept can be implemented,
- Fig. 2: very schemtatically illustrates a routing arrangement connecting to a number of end user stations/hosts over point-to-point links of a system to which the inventive concept can be implemented,
- Fig. 3: illustrates the signalling plane of IPv6 non-transparent access to an intranet or an ISP (Internet Service Provider),
- Figs. 4A, 4B: illustrate the PDP context activation for the IPv6 non-transparent case,
- Fig. 5: illustrates IPv6 stateless address autoconfiguration.
- Fig. 6: illustrates IPv6 stateful address autoconfiguration.
- Fig. 7: illustrates, initial phase sending of RAs according to the invention for router and prefix detection in the 3GPP-domain,
- Fig. 8: illustrates an implementation of the inventive concept wherein only one initial RAs is sent after reception of an Router Solicitation RS, and
- Fig. 9: illustrates an implementation according to the invention wherein no randomisation is used when sending an RA in response to an RS.

### DETAILED DESCRIPTION OF THE INVENTION

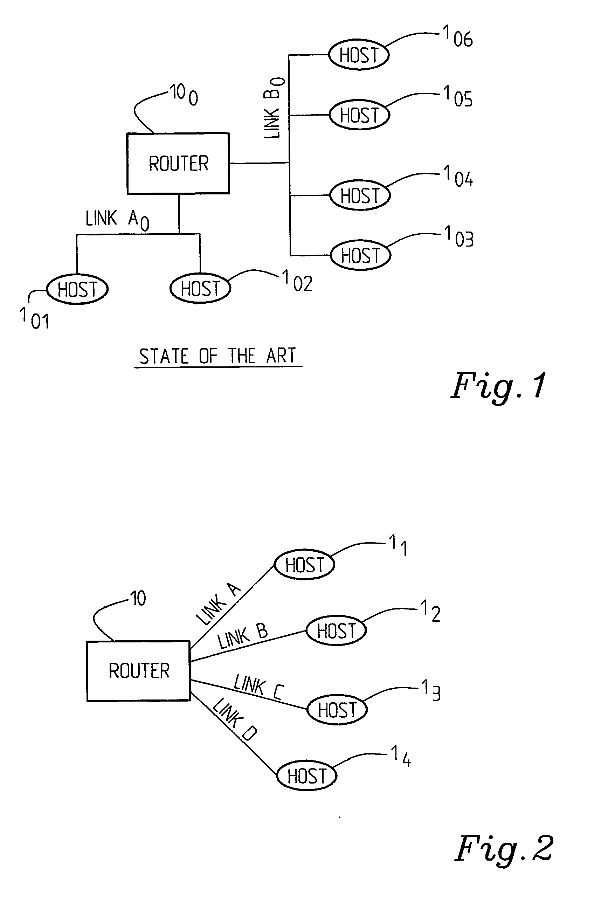

Fig. 1 very schematically illustrates a case in which a router 10₀ is connected to hosts 1₀₁, 1₀₂ over a first link A₀ and to hosts 1₀₃, 1₀₄, 1₀₅, 1₀₆ over a link Bo, i.e. point-to-multipoint connections. It may e.g. comprise an Ethernet Link. This is a general implementation e.g. as referred to in IETF RFC 2461.

Fig. 2, however, shows a router 10 connected to hosts 1₁, 1₂, 1₃, 1₄ over separate links A,B,C,D, i.e. there is only one host on each link (point-to-point links).

Such arrangements are of course known, but the inventive concept relates to IPv6 addressing in such implementations, for which improvements can be provided. The hosts may e.g. comprise 3GPP mobile stations. According to the invention the IPv6 addressing procedure e.g. of RFC 2461 is improved for such arrangements, i.e. both for point-to-multipoint and point-to-point links in general.

The invention will specifically be explained through implementations concerning GSM/GPRS, although the concept is likewise applicable to any other implementations with routing arrangements communicating with end user stations, specifically over point-to-point links, i.e. when there is just one end user station on each link, but also over point-to-multipoint links.

The access to Internet, Intranet or ISP may involve specific functions such as: user authentication, user's authorization, end to end encryption between end user station (also called MS, host Terminal Equipment, TE and Mobile Terminal, MT) and Intranet/ISP, allocation of a dynamic address belonging to the PLMN/Intranet/ISP addressing space, IPv6 address autoconfiguration etc. For this purpose the Packet Domain may offer either direct transparent access to the Internet or a non transparent access to the Intranet/ISP. In this case the Packet Domain, i.e. the GGSN (Gateway GPRS Support Node), takes part in the functions listed above.

The mechanisms for host configuration and user authentication described here are applicable to the activation of the first context activated for a specific PDP address (using the "PDP Context Activation Procedure"). The activation of any subsequent PDP contexts for that PDP address, using the "Secondary PDP Context Activation Procedure", as well as the use of TFTs (Traffic Flow Templates), is described in 3GPP TS 23.060 also referred to above.

For transparent access the MS (Mobile Station) is given an address belonging to the operator addressing space. The address is given either at subscription in which case it is a static address or at PDP context activation in which case it is a dynamic address. This address is used for packet forwarding between the Internet and the GGSN and within the GGSN. The IPv6 Stateless Address Autoconfiguration, described below, provides a convenient way to assign the MS an IPv6 address. For transparent access the MS need not send any authentication request at PDP context activation and the GGSN does not need to take any part in the user authentication/authorization process. The transparent case provides at least a basic ISP (Internet Service Provider) service. As a consequence of this it may therefore provide a bearer service for a tunnel to a private Internet.

The communication between the PLMN and the Intranet may be performed over any network, even an insecure network e.g. the Internet. There is no specific security protocol between GGSN and the Intranet because security is ensured on an end to end basis between MS and the intranet by the "Intranet protocol", e.g. IP sec, IETF FRC 1825. User authentication and encryption of user data are done within the "Intranet protocol" if either of them is needed. This "Intranet protocol" may also carry private (IP) addresses belonging to the address space of the Intranet.

For IPv6 Non Transparent access to an Intranet or ISP, the IPv6 Address Autoconfiguration offers a major new feature to the TCP/IP architecture (see RFC IETF 2461 and RFC 2462). It simplifies mobile host configuration, network setup and network management. The 3GPP adoption of autoconfiguration is also prepared to allow for future extensions, e.g. to allow site renumbering.

In IPv6, the process of setting up the access to an Intranet or ISP involves two signalling phases. The first signalling phase is done in the control plane, followed by a second signalling phase done in the user plane. The user plane signalling phase can be either stateless or stateful. The stateless procedure, which involves only the MS and GGSN, is described below. The stateful procedure, which involves the MS, GGSN (as DHCP relay agent) and one or several DHCP servers on the Intranet or ISP, is also described later in the document.

Whether to use stateless or stateful address autoconfiguration procedure is configured per APN (Access Point Name) in the GGSN. For APNs configured as stateless, the GGSN must only use the 64 bit Prefix part of the IPv6 address to determine how to forward mobile terminated IP packets. Stateful and stateless autoconfiguration can also co-exist. In that case, the TE (Terminal Equipment) shall use stateless to assign the address and stateful to configure additional parameters. Address autoconfiguration using both stateless and stateful should generally not be used since 3GPP only supports an MS having one prefix, although in other implementations that might be applicable.

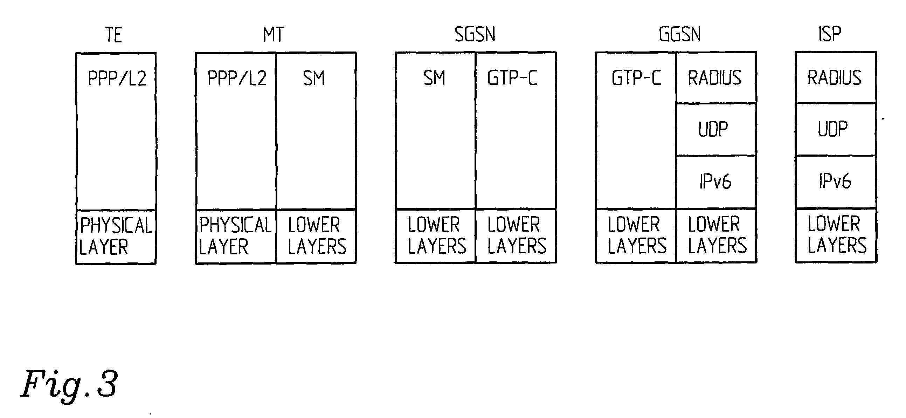

For IPv6 PDP Context Activation, the MS is given an IPv6 address belonging to the Intranet/ISP addressing space. A dynamic IPv6 address may be given using either stateless or stateful address autoconfiguration. This IPv6 address is used for packet forwarding within the GGSN and for packet forwarding on the Intranet/ISP. The MS may send an authentication request at PDP context activation and the GGSN can request user authentication from a server, like Radius, AAA,..., belonging to the Intranet/ISP. The protocol configuration options are retrieved (if requested by the MS at PDP context activation) from some server (Radius or AAA,...,) belonging to the Intranet/ISP. In order to avoid any conflict between the link-local address of the MS and that of the GGSN, the Interface-Identifier used by the MS to build its link-local address must be assigned by the GGSN. The MT (Mobile Terminal) must then enforce the use of this Interface-Identifier by the TE (Terminal Equipment). This is valid for both stateless and stateful address autoconfiguration. Fig. 3 shows the signalling plane of the IPv6 non transparent case.

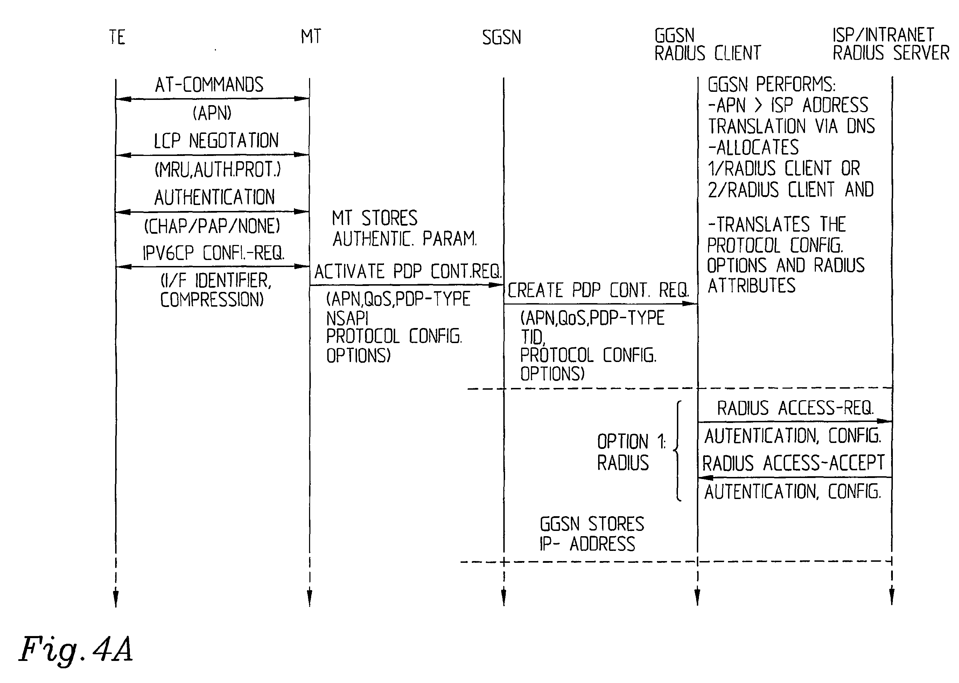

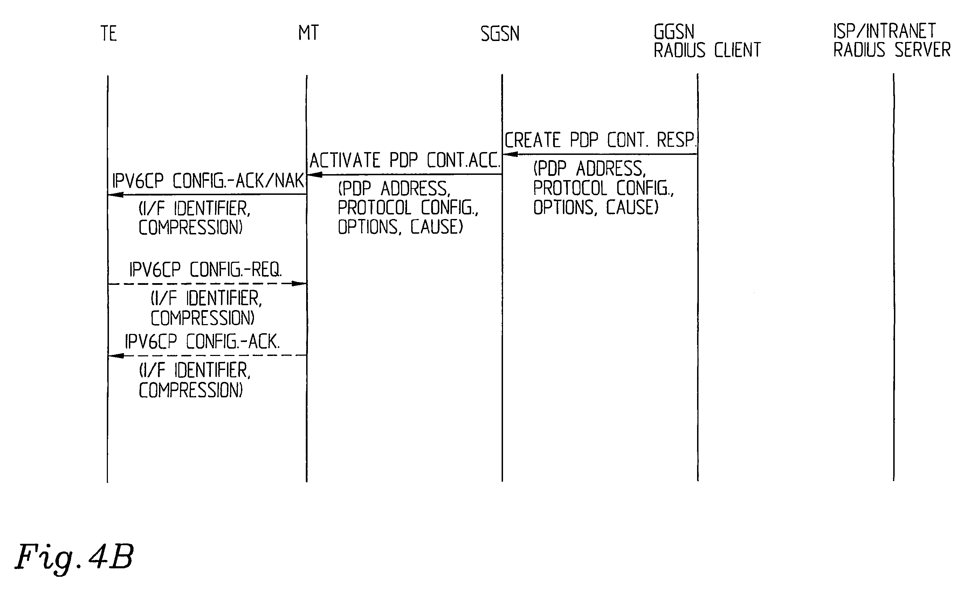

In the signalling flow example of Figs. 4A, 4B, PPP is used as layer 2 protocol over the R reference point. The MT acts as a PPP server and translates Protocol Configuration Options into SM message IEs. GTP-C (GPRS Tunnelling Protocol) carries this information unchanged to the GGSN which uses the information e.g. for RADIUS authentication. The result of the host authentication is carried via GTP-C back to the SGSN, which relays the information to the MT. The MT finalises the IPv6CP negotiation by sending an IPv6CP Configure-Ack to the TE with the appropriate options included, e.g. Interface-Identifier. The Interface-Identifier shall be used in the TE to create a link-local address to be able to perform IPv6 address autoconfiguration.

In the flow of Figs. 4A, 4B the TE sends an AT-command to the MT to set up parameters and enter PPP mode. The MT responds with an AT-response. LCP negotiates Maximum-Receive-Unit and authentication protocol. The negotiated authentication protocol is, either CHAP, PAP or "none". The MT shall try to negotiate for CHAP as a first priority. If the negotiated authentication protocol is either of CHAP or PAP, the TE authenticates itself towards the MT by means of that protocol. The MT stores the necessary authentication data and sends a forced positive acknowledgement of the authentication to the TE. The TE requests IPv6 Interface-Identifier negotiation by sending the IPv6CP Configure-Request message to the MT.

The MT sends the Activate PDP context request message to the SGSN, including the Protocol Configuration Options. The Protocol Configuration Options may contain negotiated LCP options such as negotiated Authentication Protocol as well as any authentication data previously stored in the MT. The MS shall for dynamic address allocation leave PDP Address empty and set PDP Type to IPv6. The SGSN sends the Create PDP context request message to the chosen GGSN including the unmodified Protocol Configuration Options. The GGSN deduces from the APN; IPv6 address allocation type (stateless or stateful); the source of IPv6 Prefixes in the stateless case (GGSN internal prefix pool, or external address allocation server); any server(s) to be used for address allocation, authentication and/or protocol configuration options retrieval; the protocol like Radius, to be used with this/those server(s); the communication and security feature needed to have a dialogue with this/those server(s) e.g. tunnel, IPSec security association, dial-up connection (using possibly PPP), etc.

As an example the GGSN may use one of the following options; GGSN internal Prefix pool for IPv6 prefix allocation and no authentication; GGSN internal Prefix pool for IPv6 prefix allocation and RADIUS for authentication. The RADIUS server responds with either an Access-Accept or an Access-Reject to the RADIUS client in the GGSN; RADIUS for authentication and IPv6 prefix allocation. The RADIUS server responds with either an Access-Accept or an Access-Reject to the RADIUS client in the GGSN. IPv6 Prefixes in a GGSN internal Prefix pool shall be configurable and structured per APN or set of APNs within the same addressing scope.

The GGSN shall in the PDP Address IE in the Create PDP Context Response return an IPv6 address composed of a 64-bit Prefix and a 64-bit Interface-Identifier. If stateless address autoconfiguration is configured on this APN, the Prefix assigned by the GGSN or the external RADIUS server shall be globally or site-local unique. If stateful address autoconfiguration is configured on this APN, the Prefix part of the IPv6 address returned in the PDP Address IE shall be set to the link-local prefix. The GGSN shall analyse the requested values of all the protocol options contained in the received Protocol Configurations Options IE.

The GGSN sends back to the SGSN a Create PDP Context Response message, containing the PDP Address IE and the Protocol Configuration Options IE. The cause value shall be set according to the outcome of the host authentication and configuration. Depending on the cause value received in the Create PDP Context Response, the SGSN either stores the IPv6 Prefix of the PDP Address IE and sends an Active PDP Context Accept to the MS or, sends an Activate PDP Context Reject, to the MS. If Protocol Configuration Options are received from the GGSN, the SGSN shall relay those to the MS.

In case a PDP Context Accept containing a non-zero PDP Address was sent to the MS, the MT extracts the Interface-Identifier from the address received in the PDP Address IE and ignores the Prefix part. If this Interface-Identifier is identical to the tentative Interface-Identifier indicated in the IPv6CP Configure-Request message sent from the TE, the MT sends an IPv6CP Configure Ack packet, indicating this Interface-Identifier, to the TE. If the Interface-Identifier extracted from the address contained in the PDP Address IE is not identical to the tentative Interface-Identifier indicated in the IPv6CP Configure-Request message sent from the TE, the MT sends an IPv6CP Configure Nak packet, indicating the Interface-Identifier extracted from the address contained in the PDP Address IE, to the TE. The TE then sends a new IPv6CP Configure-Request message to the MT, indicating the same Interface-Identifier as was indicated in the received IPv6CP Configure Nak (as indicated by the dotted IPv6CP Configure-Request and Configure-Ack in figures 4A, 4B). Finally the MT responds with a IPv6CP Configure Ack packet.

In case a PDP Context Accept containing a PDP Address equal to zero was sent to the MS, the GGSN shall force the MS to do a Stateful Address Autoconfiguration by setting the M-flag in the RA it will send to the MS. In case a PDP Context Reject was sent to the MS the MT sends an LCP Terminate-Request to the TE.

When the TE has accepted the Interface-Identifier given by the MT, the user plane link from the TE to the GGSN and the external ISP/Intranet are established and the IPv6 address autoconfiguration may proceed. In case a link terminate request packet was sent to the TE, the TE and MT negotiates for link termination. The MT may then send a final AT-response to inform the TE about the rejected PDP Context activation. An LCP Terminate-request causes a PDP context deactivation.

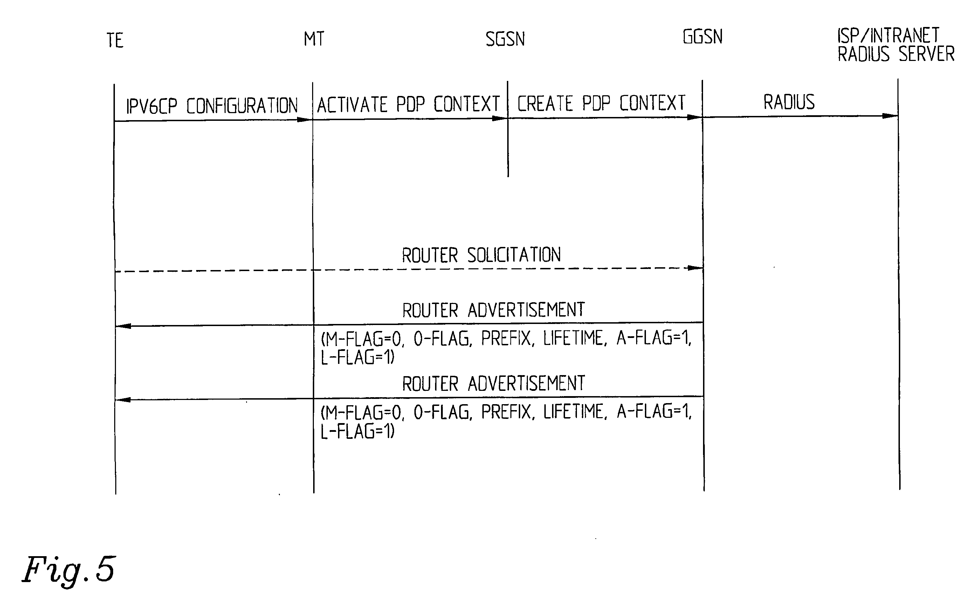

IPv6 Stateless Address Autoconfiguration will now be described with reference to Fig. 5. The first line substantially corresponds to Figs. 4A, 4B. As described in 3GPP TS 23.060, a PDP Context of PDP type IPv6 is uniquely identified by the prefix part of the IPv6 address only. The MS can select any value for the Interface-Identifier part of the address. The only exception is the Interface-Identifier for the link-local address used by the MS. This Interface-Identifier must be assigned by the GGSN to avoid any conflict between the link-local address of the MS and that of the GGSN itself.

For IPv6 the PDP Context Activation phase is followed by an address autoconfiguration phase. For APNs configured to use Stateless Address Autoconfiguration, the procedure may e.g. be as follows: After the first phase of setting up IPv6 access to an Intranet or to ISP, the TE has been given an IPv6 Interface-Identifier by the GGSN. The TE uses this Interface-Identifier to create an IPv6 Link-Local Unicast Address.

Before the TE can communicate with other hosts or TEs on the Intranet/ISP, the TE must obtain an IPv6 Global/Site-Local Unicast Address. The simplest way is the IPv6 Stateless Address Autoconfiguration procedure described below and in 3GPP TS 23.060. The procedure is substantially consistent with IETF REC 2462. The procedure below takes place through signalling in the user plane. It is done on the link between the TE and the GGSN. From the TE perspective the GGSN is now the first router on the link.

After the GGSN has sent a Create PDP Context Response message to the SGSN, it shall start sending Router Advertisements on the new MS-GGSN link established by the PDP Context. The inclusion of a Prefix information option, with a Prefix and the A-flag set ("Autonomous address configuration flag"), indicates to the MS that stateless address autoconfiguration shall be done. The L-flag shall be set (the prefix can be used for on-link determination).

The lifetime of the Prefix shall be set to an infinite lifetime. That is, the Prefix is released at PDP Context deactivation.

When GGSN indicates stateless address autoconfiguration, it must leave the M-flag cleared in the Router Advertisement message. An MS should not do stateless and stateful address autoconfiguration simultaneously, since multiple prefixes are not allowed in the 3GPP domain. The O-flag may be set though, since it does not result in additional addresses. When MS has encountered an indication for stateless address autoconfiguration, it shall ignore the M-flag.

According to the invention the handling of Router Advertisements is to a large extent consistent with what is specified in IETF RFC 2461. Some more specific handling for the MS-GGSN link shall apply though. The GGSN sends Router Advertisements. The Prefix sent in the Router Advertisement shall have a length of 64 bits and it shall be identical to the Prefix returned in the Create PDP Context Response. Its lifetime shall be set to infinity. In practice, the lifetime of a Prefix will be the lifetime of its PDP Context. There shall be exactly one Prefix included in the Router Advertisement.

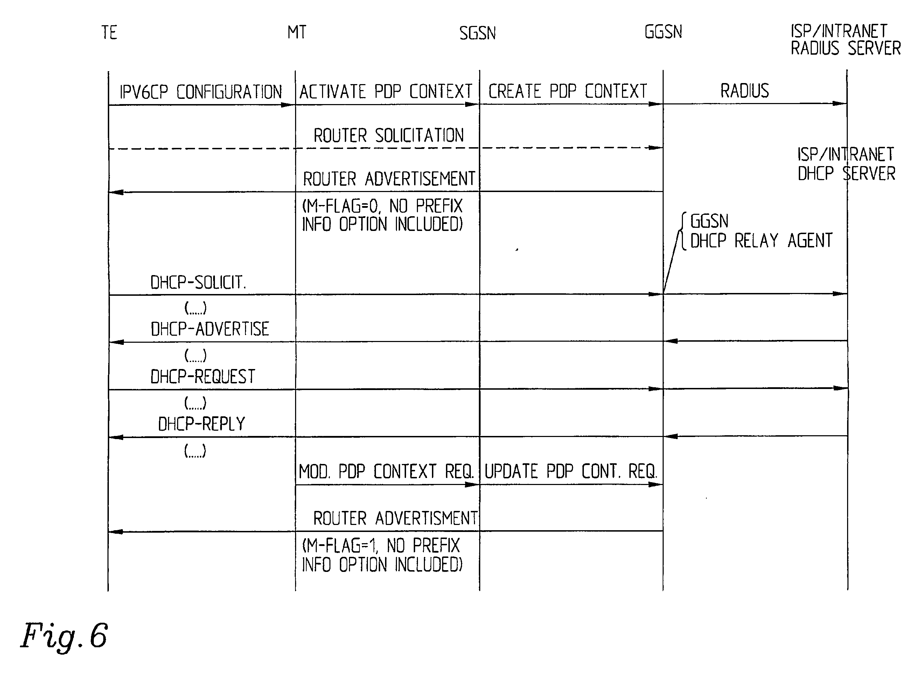

The implementation of Router Solicitation may be implemented or not (indicated through a dashed line in Fig. 5). According to the invention RAs during the initial phase are sent with a varying frequency, higher at the beginning, and lower at the end. In one implementation (also applicable to the stateful case described with reference to Fig. 6) the time intervals between subsequent time intervals increase exponentially (or in some other way). One reason therefore is to enable a faster user-plane set-up and to save end user station (host MS/TE/MT depending on implementation) power.

The end user station/TE/MS may issue a Router Solicitation (if implemented) directly after the user plane establishment in one implementation. This will trigger the GGSN to send a Router Advertisement immediately, and thereafter, no further RAs are sent during the initial phase, in particular implementations particularly for point-to-point links or at least "point-to-point inks" as far as addressing is concerned.

Fig. 6 illustrates a signalling flow for IPv6 Stateful Address Autoconfiguration. For IPv6 the PDP Context Activation phase is followed by an address autoconfiguration phase. For APNs configured to use Stateful Address Autoconfiguration, the procedure may e.g. be as disclosed herein. After the first phase of setting up IPv6 access to an Intranet or ISP, the TE has been given an IPv6 Interface-Identifier by the GGSN. The TE uses this Interface-Identifier to create an IPv6 Link-Local Unicast Address. After the GGSN has sent a Create PDP Context Response message to the SGSN, it shall start sending Router Advertisements on the new MS-GGSN link established by the PDP Context. This shall be consistent with what is specified in RFC 2461 with the difference that the frequency with which initial RAs (on the link between MS (end user station or host) and GGSN) are sent is variable, higher at the beginning, and lower at the end of the initial phase.

(After the initial phase the GGSN sends Router Advertisements periodically). When the APN is configured to use Stateful Address Autoconfiguration, the Router Advertisements shall not contain any Prefix-Information option and the M-flag ("Managed Address Configuration Flag") shall be set. The TE/end user station/MS may issue a Router Solicitation directly after the user plane establishment. Router Solicitations are however not necessarily implemented. If implemented, however, this may trigger the GGSN to send a Router Advertisement immediately, according to one implementation. Thereafter no more RAs are sent in the initial phase. When the TE has received a Router Advertisement with the M-flag set, it shall start a DHCPv6 configuration including a request for an IPv6 address. In succeeding Router Advertisements sent by GGSN on the MS-GGSN link, the Prefix information option should still be excluded, even though GGSN has learned the Prefix of the MS through the DHCP relay agent. The Prefix need not to be advertised since all addresses are off link, and no stateless address autoconfiguration needs to be signalled in this case (see RFC 2461).

For IPv6 Stateless and Stateful Address Autoconfiguration to work properly the GGSN must act as a router towards the MS. In this respect the GGSN shall be generally consistent with the RFCs specifying this process (for example RFC 2462 and RFC 2461). RFC 2461 specifies a set of conceptual router configuration variables. Some of these necessitate a specific interpretation for the MS-GGSN link and are defined per APN.
- MaxRtrAdvInterval: Shall have a default value of 21600 seconds (6 h)
- MinRtrAdvInterval: Shall have a default value of 0.75* MaxRtrAdvInterval i.e. 16200 seconds (4.5 h).
- AdvValidLifetime: Shall have a value giving Prefixes infinite lifetime, i.e. 0xFFFFFFFF. The assigned prefix remains Preferred until PDP Context Deactivaton.
- AdvPreferredLifetime: Shall have a value giving Prefixes infinite lifetime, i.e. 0xFFFFFFFF. The assigned prefix remains Preferred until PDP Context Deactivation.
RFC 2461 also specifies a number of protocol constants. According to the present invention, however, some of them shall have specific values. These are:

### MAX_INITIAL_RTR_ADVERT_INTERVAL

This constant may be variable e.g. within the 3GPP domain. It can have a value that gradually increases (exponentially or by some other means) with the number of initial Router Advertisements sent. For example, the GGSN can send initial Router Advertisements after 1,2,4,8,16 and 32 seconds. This will enable a fast setup of the MS-GGSN link in most cases, while still allowing the TE to receive a Router Advertisement within the initial phase, even in case of bad radio conditions or slow response time, without having to send a large number of initial Router Advertisements.

### MAX_INITIAL_RTR_ADVERTISEMENTS

This is the number of Router Advertisements sent during the initial phase after the MS-GGSN link has been established. Shall, in a specific implementation, have a default value so that initial Router Advertisements are sent for at least 30 seconds. The actual value depends on the implementation of

### MAX_INITIAL_RTR_ADVERT_INTERVAL.

After the initial phase, the periodicity is controlled by the MaxRtrAdvInterval and the MinRtrAdvInterval constants.

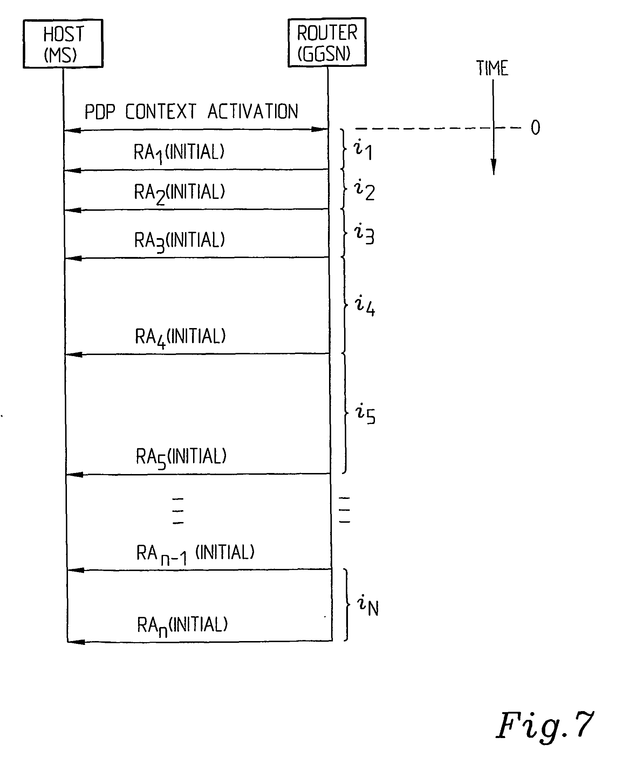

The inventive concept and some specific implementations will now be more thoroughly explained with reference to Figs. 7,8 and 9.

By end user station should be understood any host, mobile station, Terminal Equipment and/or Mobile Terminal. If for example a Laptop is connected to a MS, the Laptop acts as TE (IP-host) and the mobile station as an MT.

Fig. 7 illustrates the signalling flow for router and prefix discovery in the 3GPP-domain during the initial phase of sending Router Advertisements, RAs from a a router here a GGSN and a host (end user station), e.g. a 3GPP mobile station (MS).

RA₁, RA₂ denote initial RAs e.g. according to IETF RFC 2461 as referred to above, iₓ for x=1,...,n illustrate the time interval between consecutive RAs (or rather the time interval that should lapse from PDP Context activation till the first RA (RA₁) and subsequently the time intervals between consecutive RAs). According to IETF RFC 2461 iₓ should be a fixed value given by the router constant MAX_INITIAL_ADVERT_INTERVAL. This means that all iₓ: s (for x=1, ... , n) are similar (with the exception for a small randomized component or fraction). According to the invention, on the contrary, each time interval iₓ can be selected freely and independently of the other time intervals. In advantageous implementations an appropriate algorithm or function can be used to control the iₓ values. In a particularly advantageous implementation an exponential increase is implemented. In a most advantageous implementation each iₓ should be configurable, in the routing arrangement, particularly in GGSN.

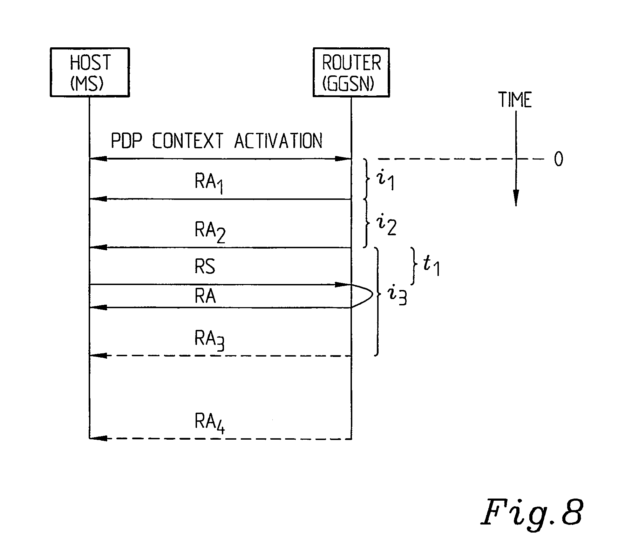

Fig. 8 shows a particular implementation according to which initial RAs can be aborted. If sending of Router Solicitations (RS) is implemented, if an RS arrives during the initial phase of sending RAs, a response RA is simply returned (e.g. according to 6.2.6. in RFC 2461). According to the invention no further initial RAs are sent after that.

In Fig. 8 it is supposed that the router (GGSN) receives an RS after having sent RA₂. After receiving the RS, an RA (response RA) is sent (before the relevant time interval has lapsed) and RA₃, RA₄ are not sent (indicated through dashed lines). Only the "response RA" is sent, and subsequent (non-initial) periodic RAs, or "unsolicited" RAs according to 6.2.4. in RFC 2461. In one particular case an RS may be received before any initial RAs at all have been sent. Then will only the response RA, i.e. the RA that is a response to the RS, be sent.

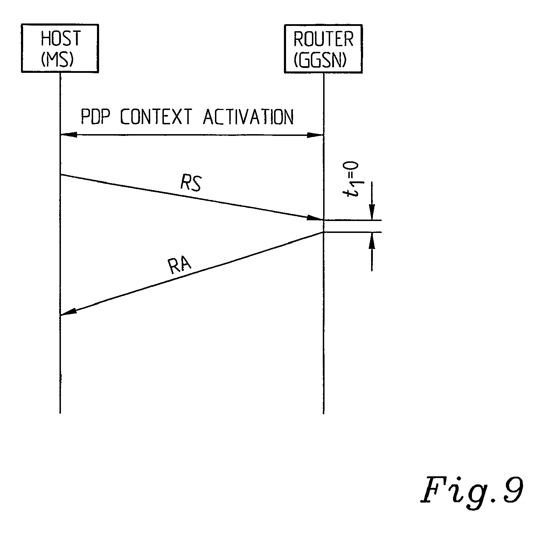

Another particular implementation relates to omission of the random component at sending an RA in response to an RS on the point-to-point link between end user station (host/MS) and routing arrangement (GGSN). This is illustrated in Fig. 9. According to the present invention t₁ is always set to be 0, as opposed to e.g. RFC 2461, section 6.2.6. according to which t₁ must be a random time between 0 and MAX_RA_DELAY/_TIME seconds, default 0,5 s. This is particularly advantageous since it further speeds up set-up and it can be done since it relates to point-to-point links. However, also for non point-to-point links, e.g. in WLANs this could be implemented if communication with one host at a time is implemented, or if specific address configuration is implemented, e.g. if the links are point-to-point links from an "address point of view".

Thus, according to an advantageous implementation of the invention, RAs are be sent frequently in the beginning and less and less frequently up to some time has passed e.g. during the initial phase (cf. sending of RAs). The values of the time intervals between successful PDP Context and first initial RA and between consecutive initial RAs may be hard coded or configurable.

An optimisation as referred to above, may also be done if the mobile terminal is implemented to send a Router Solicitation (RS). Mobile terminals however also be designed NOT to send RSs, to save battery power or possibly time. If however a terminal uses an RS to request an RA from the GGSN, an optimisation of the RA algorithm becomes possible. The terminal sends the requested RA but further initial RAs are avoided. Particularly if the mobile terminal (MS) is the only host connected the MS-GGSN link, RAs need not to be sent any more. Just the periodic RAs can be sent (the next RA e.g. 6 hours) later. If the RA sent from GGSN to MS is lost for some reason, the MS will repeat its request (RS) having a response RA as a consequence.

To summarize this implementation, if an MS sends an RS when it gets a successful reply to the Create PDP Context Request, the GGSN sends one RA and thereafter stops sending any more initial RAs.

A further particular implementation relates to exclusion of the randomisation part when calculating when to send RAs, e.g. in response to an RS. This is particularly applicable when there is only one host on the link.

The motivations for not implementing the random part when transmission times for RAs is to enable a faster user-plane set-up and less MS power consumption during long continued operation. The 3GPP MS-GGSN link though (as any point-to-point link) is a special case with only one host on the link - the MS. Therefore it is possible to send the RA immediately when the RS is received. This will also give the end-user better response times. However, in some cases it is possible to skip the random parts also when there are more hosts on the link, as discussed earlier.

It is an advantage of the invention that processing power can be saved and that radio resources can be saved (in mobile environments). It is also an advantage that just response times are given i.e. enabling a fast set-up.

The invention is of course not limited to the specifically illustrated embodiments. It is implementable for Internet in general, e.g. within the 3GPP domain (WCDMA, GSM, GPRS) fixed and wireless IP-networks in general, as well as for WLANs. Particularly it is applicable for the 3GPP IP Multimedia Subsystem (IMS) domain, which is a specific domain within 3GPP where many interactive multimedia services are specified and standardized.

## Claims

1. A communication system comprising a number of end user stations (hosts) (1₁,1₂,1₃,1₄) connected over access networks and routing arrangements (10), which system supports an IPv6 (Internet Protocol version 6) addressing scheme, wherein the end user stations (1₁,1₂,1₃,1₄) are connected to the routing arrangements (10) over links, sending of router advertisements from router arrangements to end user stations (hosts) being implemented to support provisioning of IPv6 addresses for the end user station (1₁,1₂,1₃,1₄),
**characterized in**
**that** a routing arrangement (10) is adapted to send initial router advertisements (RA₁,...,RAₙ) to an end user station (1₁,1₂,1₃,1₄) with a controllable and varying frequency during an initial phase, the routing arrangement (10) being adapted to configure the varying time intervals to lapse between consecutive initial router advertisements (RA₁,...,RAₙ), that, during said initial phase, the sending frequency is higher at the beginning and lower at the end, and in that when the initial phase has lapsed the routing arrangement (10) is adapted to send router advertisements with a fixed or constant periodicity.

2. A communication system according to claim 1,
**characterized in**
**that** the frequency with which initial router advertisements (RA₁,...,RAₙ) are sent gradually decreases, i.e. that the lengths of the time intervals between consecutive initial router advertisements gradually increase.

3. A communication system according to any one of the preceding claims,
**characterized in**
**that** the router arrangement is adapted to send initial router advertisements during the initial phase with a varying, regularly or irregularly decreasing frequency, at least during a given time period and in that the routing arrangement (10) is adapted to configure the time intervals separately.

4. A communication system according to claim 1, 2 or 3,
**characterized in**
**that** the decrease in frequency for sending of initial router advertisements occurs at given transmission times, e.g. at every second transmission time of an initial router advertisement and in that the decrements in frequency are varying.

5. A communication system according to any one of the preceding claims,
**characterized in**
**that** the router arrangement (10) is adapted to send initial router advertisements (RA₁,...,RAₙ) during the initial phase with consecutive time intervals (ΔTᵢ) varying as (ΔT_{i,i=1},...,) 1 s, 2 s, 4 s, 8 s, 16 s, 32 s, starting with the time interval for sending a first initial router advertisement, i.e. after establishment of connection.

6. A communication system according to claim 2,3 or 4,
**characterized in**
**that** the lengths of the time intervals between router advertisements increase exponentially.

7. A communication system according to claim 3, 4, 5 or 6,
**characterized in**
the router arrangement (10) is adapted to send initial router advertisements (RA₁,...,RAₙ) for at least 30 seconds.

8. A communication system according to any one of the preceding claims,
**characterized in**
**that** the time periods to lapse before sending a first initial router advertisement and subsequently between consecutive initial router advertisements are hard coded in the routing arrangement.

9. A communication system according to any one of claims 1-7,
**characterized in**
**that** the time periods to lapse e.g. before a first initial router advertisement and at least between consecutive initial router advertisements are configurable in the routing arrangement (10).

10. A communication system according to any one of the preceding claims,
**characterized in**
**that** after the initial phase has lapsed, the routing arrangement (10) is adapted to send unsolicited router advertisements with a fixed or constant periodicity.

11. A communication system according to any one of the preceding claims,
**characterized in**
**that** the links between a routing arrangement (10) and end user stations are point-to-multipoint links.

12. A communication system according to any one of claims 1-10,
**characterized in**
**that** the links between a routing arrangement (10) and end user stations are point-to-point links.

13. A communication system according to claims 11 or 12,
**characterized in**
**that** the end user station is adapted to send a message comprising a router solicitation (RS) to request information needed for creation of an IPv6 address to the routing arrangement, that the routing arrangement is adapted to handle reception of router solicitations, and to, upon reception of such a message, only send one further, initial router advertisement comprising a response, solicited, initial router advertisement during the initial phase, unless a further router solicitation is received, and to interrupt sending of further initial router advertisements.

14. A communication system according to any one of the preceding claims,
**characterized in**
**that** it implements IPv6 address autoconfiguration.

15. A communication system according to any one of the preceding claims,
**characterized in**
**that** it comprises an IP network, with fixed and/or wireless end user stations (hosts).

16. A communication system according to anyone of the preceding claims,
**characterized in**
**that** it comprises a 3GPP system, e.g. WCDMA, GSM/GPRS, UMTS.

17. A communication system according to any one of the preceding claims,
**characterized in**
**that** it comprises a Wireless Local Area Network (WLAN).

18. A communication system according to claim 16,
**characterized in**
**that** the routing arrangements comprise GGSNs, and in that at least some end user stations are mobile hosts, the prefix of the IPv6 address being provided to the mobile host by the Router Advertisement (RA), and in that upon reception thereof the mobile host is adapted to create/generate the IPv6 suffix.

19. A communication system according to claim 18,
**characterized in**
**that** a maximum or a default value is given, indicating the total number of initial router advertisements or the total time period of the initial phase when a link has been established between the mobile host or end user station and the GGSN.

20. A routing arrangement (10), in an IP communication system supporting an IPv6 addressing scheme, and connecting to a number of end user stations over links, whereby, the routing arrangement is adapted to implement sending of router advertisements to provide an end user station with information about the first part (prefix) of the IPv6 address,
**characterized in**
**that** a routing arrangement (10) is adapted to send initial router advertisements (RA₁,...,RAₙ) to an end user station with a controllable and varying frequency during an initial phase, the routing arrangement (10) being adapted to configure the varying time intervals to lapse between consecutive initial router advertisements (RA₁,...,RAₙ), that, during said initial phase, the sending frequency is higher at the beginning and lower at the end, and in that when the initial phase has lapsed, the routing arrangement (10) is adapted to send router advertisements with a fixed or constant periodicity.

21. A routing arrangement according to claim 20,
**characterized in**
**that** it is adapted to send initial router advertisements with a frequency which gradually decreases, i.e. the lengths of the time intervals before sending a first initial router advertisement and between consecutive initial router advertisements gradually increase.

22. A routing arrangement according to claim 20,
**characterized in**
**that** initial router advertisements are sent during the initial phase, with a varying, regularly or irregularly decreasing, frequency, at least during a given time period.

23. A routing arrangement according to claim 22,
**characterized in**
**that** the lengths of the time intervals before a first, and between further initial router advertisements increase exponentially.

24. A routing arrangement according to any one of claims 20-22,
**characterized in**
**that** the time periods to lapse before sending a first initial router advertisement and subsequently between consecutive initial router advertisements are hard coded in the routing arrangement.

25. A routing arrangement according to any one of claims 20-24,
**characterized in**
**that** it is adapted to receive a message comprising a router solicitation (RS) requesting information needed for creation of an IPv6 address from an end user station, and to, upon reception of such a message, only send one further, initial router advertisement comprising a response, solicited, initial router advertisement during the initial phase, unless a further router solicitation is received and to interrupt sending of further initial router advertisements.

26. A routing arrangement according to one of claims 20-25,
**characterized in**
**that** the link between the routing arrangement and end user station is a point-to-point link and that the routing arrangement is adapted to send a first initial router advertisement to an accessing/requesting end user station substantially immediately upon access/request, i.e. when the router arrangement becomes aware of the fact that the end user station needs a router advertisement.

27. A routing arrangement according to any one of claims 20-26,
**characterized in**
**that** it comprises a GGSN of a 3GPP, GSM/GPRS system.

28. A routing arrangement according to claim 27,
**characterized in**
**that** a maximum or a default value is given, indicating the total number of initial router advertisements or the total time period of the initial phase when a link has been established between a mobile host or end user station and the GGSN.

29. A method, in an IP communication system, supporting an IPv6 addressing scheme and comprising a number of end user stations connecting to routing arrangements over links,
**characterized in**
**that** it comprises the steps of, in a routing arrangement:
- configuring, using an algorithm, the time intervals between consecutive initial router advertisements during an initial phase,
- sending initial router advertisements, from the routing arrangement to an end user station, to provide said end user station with information about the first part (prefix) of the IPv6 address, with a controllable and varying frequency during the initial phase, the frequency being higher at the beginning and lower at the end of the initial phase,
- sending router advertisements with a fixed or constant periodicity when the initial phase has lapsed.

30. A method according to claim 29,
**characterized in**
**that** it comprises the step of, during the initial phase,
- gradually increasing, e.g. exponentially, the time interval between consecutive initial router advertisements.

31. A method according to claim 29 or 30,
**characterized in**
**that** it comprises the step of:
- sending initial router advertisements in the initial phase at least during a given time interval.

32. A method according to any one of claims 29-31,
**characterized in**
**that** the link between end user station and router arrangement comprises as a point-to-point link and in that the method further comprises the steps of:
- implementing sending of a message comprising a router solicitation to request IPv6 addressing information, from the end user station to the routing arrangement,
at reception of a router solicitation in the routing arrangement,
- sending only one response, solicited, initial router advertisement to the end user station during the initial phase, thus interrupting sending of further initial router advertisements unless receiving a further router solicitation.

33. A method according to any one of claims 29-32,
**characterized in**
**that** it comprises the steps of:
- sending an initial router advertisement substantially immediately, without delay, to an end user station needing IPv6 addressing information.

## Patentansprüche

1. Kommunikationssystem mit einer Anzahl von Endbenutzerstationen (Hosts) (1ᵢ, 1₂, 1₃, 1₄), die über Zugangsnetzwerke und Routing-Anordnungen (10) verbunden sind, wobei das System ein IPv6- (Internet Protocol Version 6) Adressierungsschema unterstützt, wobei die Endbenutzerstationen (1₁, 1₂, 1₃, 1₄) mit den Routing-Anordnungen (10) über Verbindungen verbunden sind, wobei das Senden von Router-Ankündigungen von Routeranordnungen an Endbenutzerstationen (Hosts) implementiert wird zur Unterstützung einer Bereitstellung von IPv6-Adressen für die Endbenutzerstation (1₁, 1₂, 1₃, 1₄),
**dadurch gekennzeichnet,**
**dass** eine Routing-Anordnung (10) ausgebildet ist zum Senden anfänglicher Router-Ankündigungen (RA₁, ..., RAₙ) an eine Endbenutzerstation (1₁, 1₂, 1₃, 1₄) mit einer steuerbaren und variierenden Frequenz während einer Anfangsphase, wobei die Routing-Anordnung (10) ausgebildet ist zum Konfigurieren der variierenden Zeitintervalle, um zwischen aufeinander folgenden anfänglichen Router-Ankündigungen (RA₁, ..., RAₙ) zu verstreichen, dass während der Anfangsphase die Sendefrequenz höher als bei dem Beginn und niedriger als bei dem Ende ist, und dass, wenn die Anfangsphase verstrichen ist, die Routing-Anordnung (10) ausgebildet ist zum Senden von Router-Ankündigungen mit einer festen oder konstanten Periodizität.

2. Kommunikationssystem gemäß Anspruch 1, **dadurch gekennzeichnet, dass** die Frequenz, mit der anfängliche Router-Ankündigungen (RA₁, ..., RAₙ) gesendet werden, schrittweise abnimmt, das heißt, dass die Längen der Zeitintervalle zwischen aufeinander folgenden anfänglichen Router-Ankündigungen schrittweise zunehmen.

3. Kommunikationssystem gemäß einem der vorhergehenden Ansprüche, **dadurch gekennzeichnet, dass** die Routeranordnung ausgebildet ist zum Senden anfänglicher Router-Ankündigungen während der Anfangsphase mit einer variierenden, regulär oder irregulär abnehmenden Frequenz, wenigstens während einer gegebenen Zeitdauer, und dass die Routing-Anordnung (10) ausgebildet ist zum separaten Konfigurieren der Zeitintervalle.

4. Kommunikationssystem gemäß Anspruch 1, 2 oder 3, **dadurch gekennzeichnet, dass** die Verringerung der Frequenz zum Senden anfänglicher Router-Ankündigungen zu gegebenen Übertragungszeiten auftritt, beispielsweise bei jeder zweiten Übertragungszeit einer anfänglichen Router-Ankündigung, und dass die Verminderungen der Frequenz variieren.

5. Kommunikationssystem gemäß einem der vorhergehenden Ansprüche, **dadurch gekennzeichnet, dass** die Routing-Anordnung (10) ausgebildet ist zum Senden anfänglicher Router-Ankündigungen (RA₁, ..., RAₙ) während der Anfangsphase mit aufeinander folgenden Zeitintervallen (ΔTᵢ), die als (ΔT_{i,i=1},..., ) 1 s, 2 s, 4 s, 8 s, 16 s, 32 s variieren, startend mit dem Zeitintervall zum Senden einer ersten anfänglichen Router-Ankündigung, das heißt nach Errichten einer Verbindung.

6. Kommunikationssystem gemäß Anspruch 2, 3 oder 4,**dadurch gekennzeichnet, dass** die Längen der Zeitintervalle zwischen Router-Ankündigungen exponentiell zunehmen.

7. Kommunikationssystem gemäß Anspruch 3, 4, 5 oder 6, **dadurch gekennzeichnet, dass** die Routing-Anordnung (10) ausgebildet ist zum Senden anfänglicher Router-Ankündigungen (RA₁, ..., RAₙ) für wenigstens 30 Sekunden.

8. Kommunikationssystem gemäß einem der vorhergehenden Ansprüche, **dadurch gekennzeichnet, dass** die Zeitdauern zum Verstreichen vor dem Senden einer ersten anfänglichen Router-Ankündigung und nachfolgend zwischen aufeinander folgenden anfänglichen Router-Ankündigungen in der Routing-Anordnung hart-codiert sind.

9. Kommunikationssystem gemäß einem der Ansprüche 1-7, **dadurch gekennzeichnet, dass** die Zeitperioden zum Verstreichen z.B. vor einer ersten anfänglichen Router-Ankündigung und wenigstens zwischen aufeinander folgenden anfänglichen Router-Ankündigungen in der Routing-Anordnung (10) konfigurierbar sind.

10. Kommunikationssystem gemäß einem der vorhergehenden Ansprüche, **dadurch gekennzeichnet, dass**, nachdem die Anfangsphase verstrichen ist, die Routing-Anordnung (10) ausgebildet ist zum Senden freiwilliger Router-Ankündigungen mit einer festen oder konstanten Periodizität.

11. Kommunikationssystem gemäß einem der vorhergehenden Ansprüche, **dadurch gekennzeichnet, dass** die Verbindungen zwischen einer Routing-Anordnung (10) und Endbenutzerstationen Punkt-zu-Multipunkt-Verbindungen sind.

12. Kommunikationssystem gemäß einem der Ansprüche 1 bis 10, **dadurch gekennzeichnet, dass** die Verbindungen zwischen einer Routing-Anordnung (10) und Endbenutzerstationen Punkt-zu-Punkt-Verbindungen sind.

13. Kommunikationssystem gemäß einem der Ansprüche 11 oder 12, **dadurch gekennzeichnet, dass** die Endbenutzerstation ausgebildet ist zum Senden einer Nachricht mit einer Routereinholung (RS), um eine zur Erschaffung einer IPv6-Adresse benötigte Information anzufordern, an die Routing-Anordnung, dass die Routing-Anordnung ausgebildet ist zum Handhaben eines Empfangs von Routereinholungen und zum, beim Empfang solch einer Nachricht, alleinigen Senden einer weiteren anfänglichen Router-Ankündigung mit einer eingeholten anfänglichen Antwort-Router-Ankündigung während der Anfangsphase, außer wenn eine weitere Routereinholung empfangen wird, und zum Unterbrechen des Sendens weiterer anfänglicher Router-Ankündigungen.

14. Kommunikationssystem gemäß einem der vorhergehenden Ansprüche, **dadurch gekennzeichnet, dass** es eine IPv6-Adressen-Autokonfiguration implementiert.

15. Kommunikationssystem gemäß einem der vorhergehenden Ansprüche, **dadurch gekennzeichnet, dass** es ein IP-Netzwerk mit stationären und/oder drahtlosen Endbenutzerstationen (Hosts) umfasst.

16. Kommunikationssystem gemäß einem der vorhergehenden Ansprüche, **dadurch gekennzeichnet, dass** es ein 3GPP-System umfasst, z.B. WCDMA, GSM/GPRS, UMTS.

17. Kommunikationssystem gemäß einem der vorhergehenden Ansprüche, **dadurch gekennzeichnet, dass** es ein Wireless Local Area Network (WLAN) umfasst.

18. Kommunikationssystem gemäß Anspruch 16, **dadurch gekennzeichnet, dass** die Routing-Anordnungen GGSNs umfassen, und dass wenigstens manche Endbenutzerstationen mobile Hosts sind, wobei der Präfix der IPv6-Adresse dem mobilen Host durch dieRouter Advertisement (RA) bereitgestellt wird, und dass beim Empfang davon der mobile Host ausgebildet ist zum Erschaffen/Erzeugen des IPv6-Suffix.

19. Kommunikationssystem gemäß Anspruch 18, **dadurch gekennzeichnet, dass** ein maximaler Wert oder ein Vorgabewert gegeben ist, der die Gesamtanzahl anfänglicher Router-Ankündigungen oder die Gesamtzeitdauer der Anfangsphase angibt, wenn eine Verbindung zwischen dem mobilen Host oder einer Endbenutzerstation und dem GGSN errichtet worden ist.

20. Routing-Anordnung (10) in einem IP-Kommunikationssystem, das ein IPv6-Adressierungsschema unterstützt und mit einer Anzahl von Endbenutzerstationen über Verbindungen verbunden ist, wodurch die Routing-Anordnung ausgebildet ist zum Implementieren eines Sendens von Router-Ankündigungen, um eine Endbenutzerstation mit einer Information über den ersten Teil (Präfix) der IPv6-Adresse zu versehen, **dadurch gekennzeichnet, dass** eine Routing-Anordnung (10) ausgebildet ist zum Senden anfänglicher Router-Ankündigungen (RA₁, ..., RAₙ) an eine Endbenutzerstation mit einer steuerbaren und variierenden Frequenz während einer Anfangsphase, wobei die Routing-Anordnung (10) ausgebildet ist zum Konfigurieren der variierenden Zeitintervalle, um zwischen aufeinander folgenden anfänglichen Router-Ankündigungen (RA₁, ..., RAₙ) zu verstreichen, dass während der Anfangsphase die Sendefrequenz höher bei dem Beginn und niedriger bei dem Ende ist, und dass, wenn die Anfangsphase verstrichen ist, die Routing-Anordnung (10) ausgebildet ist zum Senden von Router-Ankündigungen mit einer festen oder konstanten Periodizität.

21. Routing-Anordnung gemäß Anspruch 20, **dadurch gekennzeichnet, dass** sie ausgebildet ist zum Senden anfänglicher Router-Ankündigungen mit einer Frequenz, die schrittweise abnimmt, d.h., dass die Längen der Zeitintervalle vor einem Senden einer ersten anfänglichen Router-Ankündigung und zwischen aufeinander folgenden anfänglichen Router-Ankündigungen schrittweise zunehmen.

22. Routing-Anordnung gemäß Anspruch 20, **dadurch gekennzeichnet, dass** anfängliche Router-Ankündigungen während der Anfangsphase mit einer variierenden, regulär oder irregulär abnehmenden Frequenz wenigstens während einer gegebenen Zeitdauer gesendet werden.

23. Routing-Anordnung gemäß Anspruch 22, **dadurch gekennzeichnet, dass** die Längen der Zeitintervalle vor einer ersten und zwischen weiteren anfänglichen Router-Ankündigungen exponentiell zunehmen.

24. Routing-Anordnung gemäß einem der Ansprüche 20 bis 22, **dadurch gekennzeichnet, dass** die zu verstreichenden Zeitperioden vor einem Senden einer ersten anfänglichen Router-Ankündigung und nachfolgend zwischen aufeinander folgenden anfänglichen Router-Ankündigungen in der Routing-Anordnung hart-codiert sind.

25. Routing-Anordnung gemäß einem der Ansprüche 20 bis 24, **dadurch gekennzeichnet, dass** sie ausgebildet ist zum Empfangen einer Nachricht mit einer Routereinholung (RS), die eine Information anfordert, die zur Erschaffung einer IPv6-Adresse benötigt wird, von einer Endbenutzerstation, und zum, beim Empfang solch einer Nachricht, alleinigen Aussenden einer weiteren anfänglichen Router-Ankündigung mit einer eingeholten anfänglichen Antwort-Router-Ankündigung während der Anfangsphase, wenn nicht eine weitere Routereinholung empfangen wird, und zum Unterbrechen eines Sendens weiterer anfänglicher Router-Ankündigungen.

26. Routing-Anordnung gemäß einem der Ansprüche 20 bis 25, **dadurch gekennzeichnet, dass** die Verbindung zwischen der Routing-Anordnung und einer Endbenutzerstation eine Punkt-zu-Punkt-Verbindung ist, und dass die Routing-Anordnung ausgebildet ist zum Senden einer ersten anfänglichen Router-Ankündigung an eine zugreifende/anfordernde Endbenutzerstation im Wesentlichen unmittelbar beim Zugriff/Anforderung, das heißt, wenn die Routing-Anordnung der Tatsache bewusst wird, dass die Endbenutzerstation eine Router-Ankündigung benötigt.

27. Routing-Anordnung nach einem der Ansprüche 20 bis 26, **dadurch gekennzeichnet, dass** sie ein GGSN eines 3GPP, GSM/GPRS-Systems umfasst.

28. Routing-Anordnung gemäß Anspruch 27, **dadurch gekennzeichnet, dass** ein maximaler Wert oder ein Vorgabewert gegeben wird, der die Gesamtanzahl anfänglicher Router-Ankündigungen oder die Gesamtzeitdauer der Anfangsphase angibt, wenn eine Verbindung zwischen einem mobilen Host oder einer Endbenutzerstation und dem GGSN errichtet worden ist.

29. Verfahren, in einem IP-Kommunikationssystem, zur Unterstützung eines IPv6-Adressierungsschemas und mit einer Anzahl von Endbenutzerstationen, die Routing-Anordnungen über Verbindungen verbinden, **dadurch gekennzeichnet, dass** es die Schritte umfasst zum, in einer Routing-Anordnung:
- Konfigurieren, mit Verwendung eines Algorithmus, der Zeitintervalle zwischen aufeinander folgenden anfänglichen Router-Ankündigungen während einer Anfangsphase,
- Senden anfänglicher Router-Ankündigungen von der Routing-Anordnung an eine Endbenutzerstation, um die Endbenutzerstation mit einer Information über den ersten Teil (Präfix) der IPv6-Adresse zu versehen, mit einer steuerbaren und variierenden Frequenz während der Anfangsphase, wobei die Frequenz höher ist bei dem Beginn und niedriger ist bei dem Ende der Anfangsphase,
- Senden von Router-Ankündigungen mit einer festen oder konstanten Periodizität, wenn die Anfangsphase verstrichen ist.

30. Verfahren gemäß Anspruch 29, **dadurch gekennzeichnet,dass** es den Schritt umfasst zum, während der Anfangsphase,
- schrittweisen Erhöhen, z.B. exponentiell, des Zeitintervalls zwischen aufeinander folgenden anfänglichen Router-Ankündigungen.

31. Verfahren gemäß Anspruch 29 oder 30, **dadurch gekennzeichnet, dass** es den Schritt umfasst zum:
- Senden anfänglicher Router-Ankündigungen in der Anfangsphase wenigstens während eines gegebenen Zeitintervalls.

32. Verfahren gemäß einem der Ansprüche 29 bis 31, **dadurch gekennzeichnet, dass** die Verbindung zwischen einer Endbenutzerstation und einer Routing-Anordnung eine Punkt-zu-Punkt-Verbindung umfasst, und dass das Verfahren ferner die Schritte umfasst zum:
- Implementieren eines Sendens einer Nachricht mit einer Routereinholung, um eine IPv6-Adressierungsinformation anzufordern, von der Endbenutzerstation an die Routing-Anordnung, beim Empfang einer Routereinholung in der Routing-Anordnung,
- Senden nur einer eingeholten anfänglichen Antwort-Router-Ankündigung an die Endbenutzerstation während der Anfangsphase, womit das Senden weiterer anfänglicher Router-Ankündigungen unterbrochen wird, wenn nicht eine weitere Routereinholung empfangen wird.

33. Verfahren gemäß einem der Ansprüche 29 bis 32, **dadurch gekennzeichnet, dass** es die Schritte umfasst zum:
- Senden einer anfänglichen Router-Ankündigung im Wesentlichen unmittelbar, ohne Verzögerung, an eine Endbenutzerstation, die eine IPv6-Adressierungsinformation benötigt.

## Revendications

1. Système de communication comprenant un certain nombre de postes (hôtes) (1₁, 1₂, 1₃, 1₄) d'utilisateur final connectés sur des réseaux d'accès et d'agencements (10) de routage, lequel système supporte une méthode d'adressage selon le protocole d'Internet version 6 (IPv6 pour "Internet Protocol version 6"), dans lequel les postes (1₁, 1₂, 1₃, 1₄) d'utilisateur final sont connectés aux agencements (10) de routage sur des liaisons, en envoyant des annonces de routeur provenant d'agencements de routeur à des postes (hôtes) d'utilisateur final qui sont mis en oeuvre pour supporter la fourniture d'adresses IPv6 pour le poste (1₁, 1₂, 1₃, 1₄) d'utilisateur final,
**caractérisé en ce qu'**un agencement (10) de routage est apte à envoyer des annonces initiales (RA₁,...,RAₙ) de routeur à un poste (1₁, 1₂, 1₃, 1₄) d'utilisateur final avec une fréquence pouvant être commandée et variable durant une phase initiale, l'agencement (10) de routage étant apte à paramétrer les intervalles de temps variables pour s'écouler entre des annonces initiales consécutives (RA₁,...,RAₙ) de routeur, **en ce que**, durant ladite phase initiale, la fréquence d'envoi est plus élevée au commencement et plus basse à la fin, et **en ce que**, lorsque la phase initiale est écoulée, l'agencement (10) de routage est apte à envoyer des annonces de routeur avec une périodicité fixe ou constante.

2. Système de communication selon la revendication 1, **caractérisé en ce que** la fréquence avec laquelle des annonces initiales (RA₁,...,RAₙ) de routeur sont envoyées diminue graduellement, c'est-à-dire que les longueurs des intervalles de temps entre des annonces initiales consécutives de routeur augmentent graduellement.

3. Système de communication selon l'une quelconque des revendications précédentes, **caractérisé en ce que** l'agencement de routeur est apte à envoyer des annonces initiales de routeur durant la phase initiale avec une fréquence variable diminuant régulièrement ou irrégulièrement, au moins pendant une période de temps donnée et **en ce que** l'agencement (10) de routage est apte à paramétrer les intervalles de temps séparément.

4. Système de communication selon la revendication 1, 2 ou 3, **caractérisé en ce que** la diminution de fréquence pour envoyer des annonces initiales de routeur se produit à des instants d'émission donnés, par exemple, tous les deux instants d'émission d'une annonce initiale de routeur et **en ce que** les décréments de fréquence sont variables.

5. Système de communication selon l'une quelconque des revendications précédentes, **caractérisé en ce que** l'agencement (10) de routeur est apte à envoyer des annonces initiales (RA₁,...,RAₙ) de routeur durant la phase initiale avec des intervalles de temps consécutifs (ΔTᵢ) variant comme (ΔT_{i, i=1}, ...,) 1 s, 2 s, 4 s, 8 s, 16 s, 32 s, commençant avec l'intervalle de temps pour envoyer une première annonce initiale de routeur, c'est-à-dire après établissement d'une connexion.

6. Système de communication selon la revendication 2, 3 ou 4, **caractérisé en ce que** les longueurs des intervalles de temps entre des annonces de routeur augmentent exponentiellement.

7. Système de communication selon la revendication 3, 4, 5 ou 6, **caractérisé en ce que** l'agencement (10) de routeur est apte à envoyer des annonces initiales (RA₁,...,RAₙ) de routeur pendant au moins 30 secondes.

8. Système de communication selon l'une quelconque des revendications précédentes, **caractérisé en ce que** les périodes de temps à écouler avant l'envoi d'une première annonce initiale de routeur et par la suite entre des annonces initiales consécutives de routeur sont codées d'origine dans l'agencement de routage.

9. Système de communication selon l'une quelconque des revendications 1 à 7, **caractérisé en ce que** les périodes de temps à écouler, par exemple avant une première annonce initiale de routeur et au moins entre des annonces initiales consécutives de routeur, sont paramétrables dans l'agencement (10) de routage.

10. Système de communication selon l'une quelconque des revendications précédentes, **caractérisé en ce que**, après que la phase initiale s'est écoulée, l'agencement (10) de routage est apte à envoyer des annonces de routeur non sollicitées avec une périodicité fixe ou constante.

11. Système de communication selon l'une quelconque des revendications précédentes, **caractérisé en ce que** les liaisons entre un agencement (10) de routage et des postes d'utilisateur final sont des liaisons de point à multipoint.

12. Système de communication selon l'une quelconque des revendications 1 à 10, **caractérisé en ce que** les liaisons entre un agencement (10) de routage et des postes d'utilisateur final sont des liaisons de point à point.

13. Système de communication selon la revendication 11 ou 12, **caractérisé en ce que** le poste d'utilisateur final est apte à envoyer, à l'agencement de routage, un message comprenant une sollicitation de routeur (RS pour "Router Solicitation") pour demander l'information nécessaire à la création d'une adresse IPv6, **en ce que** l'agencement de routage est apte à traiter la réception d'un tel message, à envoyer seulement une annonce initiale supplémentaire de routeur comprenant une annonce initiale de routeur sollicitée, de réponse, durant la phase initiale, à moins que soit reçue une sollicitation supplémentaire, et à interrompre l'envoi d'annonces initiales supplémentaires de routeur.

14. Système de communication selon l'une quelconque des revendications précédentes, **caractérisé en ce qu'**il met en oeuvre un paramétrage automatique d'adresses IPv6.

15. Système de communication selon l'une quelconque des revendications précédentes, **caractérisé en ce qu'**il comprend un réseau sous IP, avec des postes (hôtes) d'utilisateur final fixes et/ou sans fil.

16. Système de communication selon l'une quelconque des revendications précédentes, **caractérisé en ce qu'**il comprend un système de téléphonie mobile de la troisième génération (3GPP pour "Third Generation Portable Phone"), par exemple à accès multiple par différence de code sans fil (WCDMA pour "Wireless Code Division Multiple Access"), le standard global pour les communications mobiles/service général de radio par paquets (GSM/GPRS pour "Global Standard for Mobile communications/General Packet Radio Service"), le système universel de télécommunications mobiles (UMTS pour "Universal Mobile Telecommunication System").

17. Système de communication selon l'une quelconque des revendications précédentes, **caractérisé en ce qu'**il comprend un réseau local sans fil (WLAN pour "Wireless Locale Area Network").

18. Système de communication selon la revendication 16, **caractérisé en ce que** les agencements de routage comprennent des noeuds supports de passerelle du GPRS (GGSN pour "Gateway GPRS Support Node"), et **en ce qu'**au moins certains postes d'utilisateur final sont des hôtes mobiles, le préfixe de l'adresse IPv6 étant fourni à l'hôte mobile par l'annonce de routeur (RA pour "Router Advertisement"), et **en ce qu'**à réception de celle-ci l'hôte mobile est apte à créer/engendrer le suffixe d'IPv6.

19. Système de communication selon la revendication 18, **caractérisé en ce qu'**il est donné une valeur maximale ou une valeur par défaut, indiquant le nombre total d'annonces initiales de routeur ou la période de temps totale de la phase initiale lorsqu'une liaison a été établie entre l'hôte mobile ou le poste d'utilisateur terminal et le GGSN.

20. Agencement (10) de routage, dans un système de communication sous IP supportant une méthode d'adressage selon l'IPv6, et connectant un certain nombre de postes d'utilisateur final sur des liaisons, l'agencement de routage étant apte à mettre en oeuvre l'envoi d'annonces de routeur pour fournir à un poste d'utilisateur final de l'information au sujet de la première partie (préfixe) de l'adresse IPv6,
**caractérisé en ce qu'**un agencement (10) de routage est apte à envoyer des annonces initiales (RA₁,...,RAₙ) de routeur à un poste d'utilisateur final avec une fréquence pouvant être commandée et variable durant une phase initiale, l'agencement (10) de routage étant apte à paramétrer les intervalles de temps variables pour s'écouler entre des annonces initiales consécutives (RA₁,...,RAₙ) de routeur, **en ce que**, durant ladite phase initiale, la fréquence d'envoi est plus élevée au commencement et plus basse à la fin, et **en ce que**, lorsque la phase initiale est écoulée, l'agencement (10) de routage est apte à envoyer des annonces de routeur avec une périodicité fixe ou constante.

21. Agencement de routage selon la revendication 20, **caractérisé en ce qu'**il est apte à envoyer des annonces initiales de routeur avec une fréquence qui diminue graduellement, c'est-à-dire que les longueurs des intervalles de temps avant l'envoi d'une première annonce initiale de routeur et entre des annonces initiales consécutives de routeur augmentent graduellement.

22. Agencement de routage selon la revendication 20, **caractérisé en ce que** des annonces initiales de routeur sont envoyées durant la phase initiale, avec une fréquence variable, diminuant régulièrement ou irrégulièrement, au moins durant une période de temps donnée.

23. Agencement de routage selon la revendication 22, **caractérisé en ce que** les longueurs des intervalles de temps avant une première, et entre des annonces initiales supplémentaires de routeur augmentent exponentiellement.

24. Agencement de routage selon l'une quelconque des revendications 20 à 22, **caractérisé en ce que** les périodes de temps à écouler avant l'envoi d'une première annonce initiale de routeur et par la suite entre des annonces initiales consécutives de routeur sont codées d'origine dans l'agencement de routage.

25. Agencement de routage selon l'une quelconque des revendications 20 à 24, **caractérisé en ce qu'**il est apte à recevoir, d'un poste d'utilisateur final, un message comprenant une sollicitation de routeur (RS) demandant de l'information nécessaire pour la création d'une adresse IPv6, et, à réception d'un tel message, à envoyer seulement une annonce initiale de routeur, supplémentaire, comprenant une annonce initiale de routeur, sollicitée, de réponse, durant la phase initiale, à moins qu'une sollicitation supplémentaire de routeur soit reçue et à interrompre l'envoi d'annonces initiales supplémentaires de routeur.

26. Agencement de routage selon l'une des revendications 20 à 25, **caractérisé en ce que** la liaison entre l'agencement de routage et le poste d'utilisateur final est une liaison de point à point et **en ce que** l'agencement de routage est apte à envoyer une première annonce initiale de routeur à un poste d'utilisateur final accédant/demandant pratiquement immédiatement lors de l'accès/la demande, c'est-à-dire, lorsque l'agencement de routeur devient au courant du fait que le poste d'utilisateur final a besoin d'une annonce de routeur.

27. Agencement de routage selon l'une quelconque des revendications 20 à 26, **caractérisé en ce qu'**il comprend un GGSN d'un système de 3GPP, GSM/GPRS.

28. Agencement de routage selon la revendication 27, **caractérisé en ce qu'**il est donné une valeur maximale ou une valeur par défaut, indiquant le nombre total d'annonces initiales de routeur ou la période de temps totale de la phase initiale lorsqu'une liaison a été établie entre un hôte mobile ou un poste d'utilisateur final et le GGSN.

29. Procédé, dans un système de communication sous IP, supportant une méthode d'adressage selon l'IPv6 et comprenant un certain nombre de postes d'utilisateur final se connectant à des agencements de routage sur des liaisons,
**caractérisé en ce qu'**il comprend les étapes, dans un agencement de routage :
- de paramétrage, en utilisant un algorithme, des intervalles de temps entre des annonces initiales consécutives de routeur durant une phase initiale ;
- d'envoi d'annonces initiales de routeur, de l'agencement de routage à un poste d'utilisateur final, pour fournir audit poste d'utilisateur final de l'information au sujet de la première partie (préfixe) de l'adresse IPv6, avec une fréquence pouvant être commandée et variable durant la phase initiale, la fréquence étant plus haute au commencement et plus basse à la fin de la phase initiale ;
- d'envoi d'annonces de routeur avec une périodicité fixe ou constante lorsque la phase initiale est écoulée.

30. Procédé selon la revendication 29, **caractérisé en ce qu'**il comprend l'étape, durant la phase initiale, d'augmentation graduelle, c'est-à-dire exponentiellement, de l'intervalle de temps entre des annonces initiales consécutives de routeur.

31. Procédé selon la revendication 29 ou 30, **caractérisé en ce qu'**il comprend l'étape d'envoi d'annonces initiales de routeur dans la phase initiale au moins durant un intervalle de temps donné.

32. Procédé selon l'une quelconque des revendications 29 à 31, **caractérisé en ce que** la liaison entre un poste d'utilisateur final et un agencement de routeur comprend une liaison de point à point et **en ce que** le procédé comprend en outre les étapes :
- de mise en oeuvre de l'envoi, du poste final d'utilisateur à l'agencement de routage, d'un message comprenant une sollicitation de routeur pour demander de l'information d'adressage sous IPv6 ; à réception d'une sollicitation de routeur dans l'agencement de routage :
- d'envoi, au poste d'utilisateur final, seulement d'une annonce initiale de routeur, sollicitée, de réponse, durant la phase initiale, en interrompant ainsi l'envoi d'annonces initiales supplémentaires de routage à moins de recevoir une sollicitation supplémentaire de routeur.

33. Procédé selon l'une quelconque des revendications 29 à 32, **caractérisé en ce qu'**il comprend l'étape d'envoi d'une annonce initiale de routeur pratiquement immédiatement, sans retard, à un poste d'utilisateur final nécessitant de l'information d'adressage sous IPv6.
